# EUROPEAN PATENT SPECIFICATION

(11) **EP 3 262 954 B1**
(45) Date of publication and mention of the grant of the patent: **17.02.2021**
(21) Application number: 16755612.5
(22) Date of filing: 25.02.2016
(51) Int. Cl.: A23L 2/00, A23L 2/70, A23L 2/56

(54) **CLEAR BEVERAGE CONTAINING CITRUS FLAVOR**
KLARES GETRÄNK MIT ZITRUSAROMA
BOISSON CLAIRE CONTENANT UN ARÔME D'AGRUME

(30) Priority: 25.02.2015 JP 2015035827; 04.09.2015 JP 2015174756
(43) Date of publication of application: 03.01.2018
(73) Proprietor: Suntory Holdings Limited, Kita-ku, Osaka-shi Osaka 530-8203 (JP)
(72) Inventor: YASUI, Yohei, Kawasaki-shi Kanagawa 211-0067 (JP); SENGA, Yoshinori, Kawasaki-shi Kanagawa 211-0067 (JP)
(74) Representative: Vossius & Partner Patentanwälte Rechtsanwälte mbB
(86) International application number: PCT/JP2016/055592
(87) International publication number: WO 2016/136868

(56) References cited:
- JP-A- 2003 052 331
- JP-A- 2004 000 084
- JP-A- 2004 000 085
- JP-A- 2005 015 686
- JP-A- 2010 521 175
- JP-A- 2013 143 938
- JP-A- 2014 054 192
- US-A1- 2012 088 013
- Anonymous: "Strawberry and Vanilla Flavoured Still Drink", GNPD, January 2011 (2011-01), XP055497204, Retrieved from the Internet: URL:http://www.gnpd.com/sinatra/recordpage /1467092/ [retrieved on 2018-08-03]
- Jean-Paul Vidal: "Vanillin" In: "KIRK-OTHMER ENCYCLOPEDIA OF CHEMICAL TECHNOLOGY (4th edition)", 19 May 2006 (2006-05-19), Wiley-Interscience, Hoboken, NJ, USA, XP055497233, ISBN: 978-0-471-48494-3 * page 6, last paragraph *
- Anonymous: "White Tea Refreshers Water Beverage", GNPD, 2008, XP055497197, Retrieved from the Internet: URL:http://www.gnpd.com/sinatra/recordpage /838897/ [retrieved on 2018-08-03]
- M Gascon: "Masking agents for use in foods" In: "Modifying flavour in food", 8 June 2007 (2007-06-08), Woodhead Publishing, XP055497183, ISBN: 978-1-84569-074-8 pages 232-242, * paragraph [13.3.2] *
- DATABASE GNPD [Online] MINTEL; 8 August 2012 (2012-08-08), anonymous: "Carbonated Soft Drink with Lemon", XP055587738, retrieved from www.gnpd.com Database accession no. 1859399
- DATABASE GNPD [Online] MINTEL; 2 January 2015 (2015-01-02), anonymous: "Lemon Water", XP055587749, retrieved from www.gnpd.com Database accession no. 2897865

## Description

### TECHNICAL FIELD

The present invention relates to clear beverages containing citrus flavorings, and more particularly, to clear beverages from which fruit flavoring derived deterioration smells will be less sensed.

### BACKGROUND ART

Variously flavored beverages are manufactured by imparting raw materials such as fruit juice, flavorings and extracts. It is known that if flavorings having citrus or other fruit-like flavors in particular are used, aroma/taste components in the flavorings will change under the effect of light or heat, causing an unusual taste or smell (off-flavor).

Lots of methods have been proposed for preventing the deterioration of fruit flavorings; for example, Patent Document 1 discloses the use of oxypeucedanin hydrate and/or byakangelicin as an agent for preventing the deterioration of flavorings. In addition, Patent Document 2 discloses the use of tea polyphenol to suppress the generation of off-flavor causing p-methylacetophenone from citral in citrus flavorings Citrus flavoured beverage with vanillin is already commercialzed ("Carbonated Soft Drink with Lemon",www.gnpd.com Database accession no. 1859399). Transparent citrus beverage is also commercialized ("Lemon Water", www.gnpd.com Database accession no. 2897865). US2012/088013 discloses fruit flavoured beverages wherein the metallic staste of steviol glycoside is maksed with anisidic acid. Vanillin may also be present. JP2005015686 A discloses fruit flavoured beverages such as a citrus flavoured beverage, and wherein vanillin, ethyl- octanoate or 2-undecanone are mentioned.

Among beverages having fruit-like flavors is included a beverage as clear as water and sometimes called "flavored water," which consists of water such as mineral water to which raw materials such as flavorings, extracts or fruit juice have been added.

### CITATION LIST

### PATENT LITERATURE

Patent Document 1: JP 2010-99025A
Patent Document 2: JP 2003-96486A

### SUMMARY OF INVENTION

### TECHNICAL PROBLEM

The present inventors noticed that among beverages containing fruit-like flavorings, clear beverages such as flavored water, in particular, permit better release of volatile components than cloudy or turbid beverages, providing a greater chance for unusual-smell or taste causing substances to reach the tongue or nose of consumers directly, with the result that the deterioration of flavorings will become more pronounced.

As mentioned above, various methods have been proposed for suppressing the deterioration of fruit flavorings but in practice it has been difficult to suppress the deterioration of fruit flavorings while maintaining the clarity of beverages such as flavored water. In addition, a problem with clear beverages that contain relatively small amounts of components is that if heretofore reported deterioration suppressants are added, the balance in the relish of the beverages is easily upset and it has also been difficult to maintain the natural acidity and fruit juice feeling of the beverages and yet rendering the deteriorated aroma and taste to be less sensed. An object, therefore, of the present invention is to provide a novel beverage from which any unusual taste or smell from the deterioration of citrus flavorings will be less ensed and which also retains clarity while possessing natural acidity or citrus juice.

### SOLUTION TO PROBLEM

The present inventors conducted intensive studies with a view to solving the above-described problems; as a result, they found that when aroma components from dairy beverages were contained in amounts within specified ranges in clear beverages incorporating fruit flavorings, it was possible to provide beverages that maintained their clearness and from which any unusual taste or smell due to the deterioration of fruit flavorings would be less sensed while possessing natural acidity or fruit juice feeling. The present invention has been accomplished on the basis of this finding. The term fruit flavoring in the context of the invention refers to a citrus flavoring.

The present invention encompasses, but is not limited to, the following:
(1) A beverage containing a fruit flavoring and one or more of the following aroma components:
   5 to 5000 ppb of vanillin;
   3 to 15 ppb of ethyl octanoate; or
   50 to 500 ppb of 2-undecanone;
   with an absorbance of 0.06 or less at a wavelength of 660 nm, wherein the fruit flavouring is a citrus flavouring.
(2) The beverage as recited in (1) which has a ΔE value (color difference) of 3.5 or less, with pure water taken as a reference.
(3) The beverage as recited in (1) or (2) which has a reading of 3.0 to 10.0 on a sugar refractometer (Brix).

### ADVANTAGEOUS EFFECTS OF INVENTION

According to the present invention, there can be provided a beverage from which a deterioration smell or taste of citrus flavorings will less sensed although it is as clear as water.
As a further advantage, fruit flavorings and the aforementioned components found in dairy beverages have good compatibility and by combining them together, fruit-like natural acidity or a relish like that of natural fruit juice (fruit juice feeling) can be imparted to beverages.

### DESCRIPTION OF EMBODIMENTS

### (Fruit flavorings)

Flavorings are intended for addition to foods and drinks. Addition of flavorings can make up for the loss of pleasant aroma or taste that occurs during the manufacture or storage of foods and drinks, or can impart a new flavor to foods and drinks. Among the flavorings, fruit flavorings that are to be added to the beverage of the present invention are those flavorings which present an aroma reminiscent of associated fruits upon eating or drinking. Such flavorings include: processed natural products as from fruits, fruit juice and rinds, which are exemplified by concentrates of fruit juice, rind oil, and extracts obtained by immersing fruits, etc. in organic solvents; and chemically synthesized fruit-like aroma components. The amount of the fruit flavoring in the beverage should at least be the quantity that can be sensed as a fruit-like aroma or taste when the beverage is drunk; specifically, the amount of interest is determined by the strength of the flavoring itself. It is also required that the amount of interest should not impair the clearness of the beverage. Consider, for example, a fruit flavoring that is in the form of an ethanol extract of a fruit; it may be used in amounts of about 1 to 10.000 ppm depending on its strength and the clarity of the beverage containing it.

Examples of the "fruit" in fruit flavorings include not only citruses such as orange, *Satsuma,* mandarin, lemon, and lime but also other fruits like peach, grape, strawberry, apple, pineapple, mango, and melon. It should, however, be noted that the fruit of vanilla is excluded. Among the applicable fruit flavorings, citrus flavorings are contained in the beverage of the invention because their refreshing aroma and taste match the refre hing image of clear beverages and, what is more, they have good chemistry with aroma components such as vanillin (to be described later) that are contained in dairy beverages.

Fruit flavorings are generally known to deteriorate upon exposure to light or heat, producing an offensive unusual taste or smell (off-flavor). The beverage of the present invention, since it contains not only a fruit flavoring but also specified aroma components that are present in specified concentration ranges, is capable of masking any offensive off-flavor that results from the deterioration of the fruit flavoring. The components of the off-flavor resulting from the deteriorated fruit flavoring include, but are not limited to, α-terpineol, for example, which is a kind of monoterpenealcohol with the molecular formula C₁₀H₁₈O. For example, a beverage containing 500 ppb or more of α-terpineol can be considered as a drink with a deteriorated fruit flavoring. The amount of α-terpineol in a beverage can be measured in the same way as aroma components in beverage were quantitated in the section of Examples to be described later, for example, by using GC/MS measurement equipment.

### (Aroma components contained in dairy beverages)

The beverage of the present invention contains not only a fruit flavoring but also specified aroma components, as found in dairy beverages, which are present in specified concentration ranges. Dairy beverages refers to drinks that are based on cow or otherwise milks which are supplemented with sweeteners, fruit juice, etc. or enriched with vitamins, minerals or other components, as well as lactobacillus beverages prepared by fermenting milk; the specified aroma components as found in dairy beverages specifically refers to vanillin, maltol, ethyl maltol, ethyl octanoate, and 2-undecanone. The present inventors found that by incorporating these aroma components at specified concentrations, the off-flavor resulting from the deteriorated fruit flavoring in the beverage could be masked without impairing the clearness of the beverage. It is not completely clear why these aroma components can mask the deterioration smell of the fruit flavoring but most probably, the somewhat sweet fragrance of these aroma components may wrap the offensive odor of the off-flavor, making it less perceivable. Note that dairy beverages are usually cloudy or turbid and as far as the Applicant knows, clear dairy beverages are yet to be commercially available.

In the case of adding vanillin as an aroma component, its concentration in the beverage is 5 to 5000 ppb, more preferably 100 to 3000 ppb, even more preferably 100 to 2000 ppb. Vanillin (4-hydroxy-3-methoxybenzaldehyde; C₈H₈O₃) is an aroma component presenting a sweet fragrance, which is typically obtained from the fruit of vanilla; vanillin can also be obtained by decomposing lignin. The origin of vanillin is not particularly limited and may be anything that is suitable for foods and drinks. Vanillin is contained in the fruit of vanilla but it is usually absent from the above-mentioned fruits other than vanilla. Hence, in order to prepare the beverage of the present invention, the fruit flavoring is not the only component that need be added; it is also required that vanillin be intentionally added in the specified concentration range, with a further need to maintain the clarity of the beverage. In addition, the beverage containing the fruit flavoring and vanillin will develop such a relish that it is sweet-sour while presenting a certain degree of "body" with the result that it is a drinkable beverage.

Similarly, in the case of adding maltol as an aroma component, in combination with one or more of vanillin, ethyl octanoate, or 2-undecanone, its concentration in the beverage is at least 500 ppb, preferably 500 to 40,000 ppb, more preferably 1000 to 30,000 ppb, even more preferably 1500 to 20,000 ppb. Having the chemical name 3-hydroxy-2-methyl-4H-pyran-4-one, maltol is an aroma component presenting a sweet fragrance that is either generated by pyrolysis of saccharides or contained typically in pine needles. The origin of maltol is not particularly limited and may be anything that is suitable for foods and drinks.

In the case of adding ethyl maltol as an aroma component, in combination with one or more of vanillin, ethyl octanoate, or 2-undecanone, its concentration in the beverage is at least 100 ppb, preferably 100 to 20,000 ppb, more preferably 300 to 10,000 ppb. Having the chemical name 2-ethyl-3-hydroxy-4-pyranone, ethyl maltol is an aroma component presenting a sweet fragrance as from pyrolysis of saccharides. The origin of ethyl maltol is not particularly limited and may be anything that is suitable for foods and drinks.

In the case of adding ethyl octanoate as an aroma component, its concentration in the beverage is 3.0 to 15.0 ppb, more preferably 3.0 to 5.5 ppb, even more preferably 3.5 to 5.5 ppb. Ethyl octanoate is an aroma component presenting a somewhat fruity sweet fragrance that is reminiscent of fermentation. The origin of ethyl octanoate is not particularly limited and may be anything that is suitable for foods and drinks.

In the case of adding 2-undecanone as an aroma component, its concentration in the beverage is 50 to 500 ppb, more preferably 50 to 200 ppb, even more preferably 70 to 150 ppb. The substance 2-undecanone is an aroma component presenting a somewhat floral sweet fragrance. The origin of 2-undecanone is not particularly limited and may be anything that is suitable for foods and drinks.

The above-described aroma components may be contained, either alone or as a combination of two or more species, in the beverage. The amount of each aroma component in the beverage can be measured by a known method such as gas chromatography/mass spectrometry (GC/MS). See, for example, the method described in the section of Examples to be given later.

### (Clear beverage)

The beverage of the present invention is clear. To say "the beverage is clear" means that the beverage is not cloudy like a so-called isotonic drink nor does it have haze like a turbid fruit juice and that it is visibly clear like water. The clarity of the beverage can be expressed as numbers by using, for example, a known technique that measures the turbidity of liquids. To give an example, a beverage that has an absorbance of no more than 0.06 at a wavelength of 660 nm as measured with an ultraviolet visible spectrophotometer (e.g. UV-1600 of Shimadzu Corporation) may be described as being "clear."

The color of the beverage is not particularly limited and it may be colored if it retains the above-defined clearness. In practice, however, an off-flavor generally tends to develop in beverages that have as faint a color as water, especially when they undergo the effect of light or the like, so a beverage that is faint in color or colorless like water may well be considered a preferred mode of the present invention. To be more specific, the beverage of the present invention achieves effective masking of an off-flavor even if its color is faint like water. The color of the beverage can be expressed as numbers by using, for example, a known technique that measures the color difference of an object. To give an example, a beverage that transmits light at a ΔE value of no more than 3.5 as measured with a color meter (e.g. ZE2000 of NIPPON DENSHOKU INDUSTRIES CO., LTD.) using pure water as a reference may be described as being "colorless." A preferred ΔE value is no more than 2.3.

### (Others)

The beverage of the present invention contains not only the fruit flavoring and the various aroma components found in dairy beverages but also other ingredients for ordinary beverages that may be optionally added to the extent that will not impair the clearness of the beverage; examples of such optional ingredients include sweeteners, acidulants, antioxidants, minerals such as salts, common flavorings, bitterness imparting agents, enrichments (e.g. vitamins), pH modifiers, and so on.

Sweeteners include, for example: natural sweeteners such as fructose, sugar, high fructose corn syrup, glucose, maltose, sucrose, high fructose syrup, sugar alcohol, oligosaccharides, honey, squeezed sugarcane juice (black molasses), starch syrup, stevia powder, stevia extract, *Siraitia grosvenorii* powder, *Siraitia grosvenorii* extract, licorice powder, licorice extract, *Thaumatococcus daniellii* seed powder, and *Thaumatococcus daniellii* seed extract; and artificial sweeteners such as acesulfame potassium, sucralose, neotame, aspartame, and saccharin. Among these, natural sweeteners are preferably used from the viewpoints of imparting a clean finish, drinkability, a natural relish, and an appropriate degree of body, and fructose, glucose, maltose, sucrose and sugar are used with particular advantage. The above-mentioned sweetness components may be used either alone or as a mixture of two or more species.

Acidulants include, but are not limited to, the following, for example: citric acid, lactic acid, gluconic acid, phosphoric acid, tartaric acid, acetic acid, succinic acid, adipic acid, fumaric acid, and malic acid, or the juice of fruits such as lemon, orange, and grapefruit. The present inventors found that the deterioration smell suppressing effect of the present invention was obtained in a particularly marked way when lactic acid and/or gluconic acid was used in combination with citric acid, the most commonly used acidulant. In this case, the preferred concentration of acidulant in the beverage is 0.03 to 0.2 mass% for citric acid, 0.01 to 0.1 mass% for lactic acid, and 0.05 to 0.2 mass% for gluconic acid. Acidulants which are used for the particular purpose of imparting acidity to beverages were thought to have no effect on the suppression of deterioration smell, so it was unexpected that a high deterioration smell suppressing effect was obtained by the above-specified combination of acidulants.

Minerals include, but are not limited to, sodium, potassium, magnesium, calcium, iron and so on; these may be added to beverages in the form of salts that can be used in foods and drinks, or alternatively, deep ocean water, seaweed extract and the like that are rich in these minerals may be added to the beverage. Thanks to the breeziness from its transparent appearance and the aroma of the fruit flavoring contained, the beverage of the present invention is optimum as a rehydration solution that is to be drunk in summer or in sports. If necessary, the beverage can be adapted for sodium supply during perspiration by adjusting its sodium concentration to lie within an appropriate range. The concentration of sodium in the beverage may, for example, range from 15 to 80 mg/100 ml. The present inventors also found that a particularly superior deterioration smell suppressing effect was obtained when the concentration of sodium in the beverage was between 20 to 40 mg/100 ml. Since minerals such as sodium were thought to have nothing to do with the suppression of deterioration smell, it was unexpected that a high deterioration smell suppressing effect was obtained by the specified concentration of sodium.

The beverage of the present invention preferably has a Brix of 3.0 to 10.0, more preferably 4.5 to 7.0. The term Brix refers to a value measured as a reading on sugar refractometer. The low Brix beverage mentioned above has a relish that gives a clean finish and its taste advantageously has a good match with the refreshing image that derives from its transparent appearance.

The beverage of the present invention may be prepared as heat-sterilized and packed in a container. The applicable container is not particularly limited and may be exemplified by a PET bottle, aluminum can, steel can, paper pack, chilled cup, bottle, and so on. Among these, a transparent container, say, a PET bottle is preferred because the transparent appearance which characterizes the beverage of the present invention can be checked as it remains packed in the container. Fruit and otherwise flavorings are generally known to deteriorate under heat from sterilization during the manufacture of packed beverages or upon exposure to external light during storage after packing in the transparent container; however, the beverage of the present invention has an advantage in that the unusual taste or smell resulting from the deterioration of the fruit flavoring is sufficiently masked to become less sensed. It may well be said that the clear beverage of the present invention is optimum for packing in a transparent container after heat sterilization. If heat sterilization is to be performed, it is not particularly limited in type and may be performed using a conventional technique such as UHT sterilization or retort sterilization. The temperature of the heat sterilizing step is not particularly limited and it may be 65 to 130°C, preferably 85 to 120°C, which lasts for 10 to 40 minutes. It should, however, be noted that if an intensity of sterilization equivalent to these conditions is secured, sterilization at a suitable temperature for several seconds, say, 5 to 30 seconds may be performed without any problem.

### EXAMPLES

Hereinafter, the present invention will be described by reference to working examples which are by no means intended to limit the scope of the present invention.

### (Method of quantitating aroma components in beverage)

The concentrations of aroma components in a beverage (sample solution) were determined by the following method using GC/MS measurement equipment.

Five grams of the sample solution were aliquoted in a vial (capacity: 20 ml) and Gerstel Twister (PDMS) was switched on to extract aroma components at room temperature for 30 minutes; the sample solution was then subjected to measurement by thermal desorption GC/MS. Quantitative values were calculated by the standard addition method. Measurement by GC/MS was conducted under the following conditions.
Apparatus:
GC: GC6890N of Agilent Technologies
MS: 5975B of Agilent Technologies
Thermal desorption: Gerstel TDU
Column: Inert cap pure WAX 30 m × 0.25 mm^{i.d.} df = 0.25 µm
Ions to be quantitated:
Vanillin m/z= 151
Maltol m/z=126
Ethyl maltol m/z=140
Ethyl octanoate m/z=88,
2-Undecanone m/z=58,
Temperature condition: 40°C (5 min) to 10°C/min to 260°C
Carrier gas flow rate: He 1.2 ml/min
TDU temperature: 260°C
IF temperature: 260°C
Ion source temperature: 230°C.

### (Reference Example 1)

To water, high fructose corn syrup was added to prepare a solution adjusted to Brix 6.0; to the solution, citric acid and a lemon flavoring were added in respective amounts of 0.12 mass% and 0.1 mass%; thereafter, trisodium citrate was added for pH adjustment to 3.6. Furthermore, skim milk or an emulsion preparation (a vegetable fat or oil emulsified with gum arabic) was added to have the concentration (unit: mass%) cited in the following Table 1, and the resulting solution was filled into a sealable container (a glass bottle with a capacity of 180 ml) and heat-sterilized at 85°C for 10 minutes. By subsequent storage at 55°C for 2 days, accelerated deterioration occurred to allow for the preparation of trial products 1 to 3. The thus prepared trial products 1 to 3 were subjected to absorbance measurement with a spectrophotometer (UV-1600 of Shimadzu Corporation) at a wavelength of 660 nm; the results are shown in Table 1. Trial product 1 was colorless and clear whereas trial products 2 and 3 were cloudy. The intensity of the deterioration smell from the drinking of these trial products was evaluated by three panelists on a five-score rating criterion, with 5 being the best (comparable to a chilled sample that was stored in a refrigerator without accelerated deterioration after heat sterilization) and 1 being the worst (considerably more deteriorated than the chilled sample to give off a strong unusual smell). The averaged evaluation scores are cited in Table 1. The following can be said about the effectiveness for suppressing the deterioration smell: no effect at all if the averaged evaluation score is less than 2.5; almost no effect at all if the averaged evaluation score is between 2.5 to less than 3.5; effective if the averaged evaluation score is between 3.5 to less than 4.0; very effective if the averaged evaluation score is 4.0 or more.

**[Table 1]**

| | Chilled sample | Trial product 1 | Trial product 2 | Trial product 3 |
|---|---|---|---|---|
| Skim milk (%) | - | - | 0.06 | - |
| Emulsion preparation (%) | - | - | - | 0.02 |
| Absorbance at 660 nm | 0.001 | 0.001 | 0.071 | 0.087 |
| Sensory evaluation score | - | 2.3 | 3.3 | 3.3 |
| Comments | Natural acidity and solid fruit juice feeling | Acidity and bitterness sensed as from rotten citrus | With decreased fruit juice feeling, somewhat unnatural acidity sensed | With decreased fruit juice feeling, somewhat unnatural acidity sensed |

According to the data in Table 1, the deterioration smell from the fruit flavoring in trial products 2 and 3 which were not clear was less sensed than that in clear trial product 1, indicating that clearness made the deterioration smell from the fruit flavoring more pronounced.

### (Reference Example 2)

To water, high fructose corn syrup was added to prepare a solution adjusted to Brix 6.0; to the solution, citric acid and a lemon flavoring were added in respective amounts of 0.14 mass% and 0.01 mass%; thereafter, α-terpineol was added to have the concentrations cited in the following Table 2. To the respective samples, trisodium citrate was further added for pH adjustment to 3.6. The samples were each filled into a sealable container (a glass bottle with a capacity of 180 ml) and heat-sterilized at 85°C for 10 minutes to prepare trial products 4 to 9. The drinkability of these trial products was evaluated by three panelists on a five-score rating criterion, with 5 being "easy to drink", 4 being "fairly easy to drink", 3 being "impossible to evaluate", 2 being "fairly difficult to drink", and 1 being "difficult to drink." The averaged evaluation scores are cited in Table 2.

**[Table 2]**

| | Trial product 4 | Trial product 5 | Trial product 6 | Trial product 7 | Trial product 8 | Trial product 9 |
|---|---|---|---|---|---|---|
| α-Terpineol (ppb) | 0 | 100 | 500 | 1000 | 10000 | 50000 |
| Sensory evaluation score | 5.0 | 5.0 | 4.3 | 3.7 | 3.0 | 2.7 |
| Comments | Refreshing acidity sensed | Refreshing acidity sensed | Slightly pungent acidity sensed | Pungent acidity sensed | Somewhat stimulating acidity sensed | Stimulating acidity and bitterness sensed |

From the data in Table 2, it can be seen that when the content of α-terpineol was 500 ppb or more, the acidity changed from "refreshing" to "pungent", thus lowering the drinkability.

### (Example 1)

To water, high fructose corn syrup was added to prepare a solution adjusted to Brix 6.0; to the solution, citric acid and a lemon flavoring were added in respective amounts of 0.12 (or 0.14) mass% and 0.1 mass%; thereafter, trisodium citrate was added for pH adjustment to 3.6. The thus conditioned solution was filled into a sealable container (a glass bottle with a capacity of 180 ml) and heat-sterilized at 85°C for 10 minutes. By subsequent storage at 55°C for 2 days, the fruit flavoring was caused to undergo accelerated deterioration. Various aroma components were then added at the concentrations (unit: ppb) cited in the following Tables 3 and 4 to prepare trial products 10 to 52 (17-36 and 52 not being part of the invention). The thus prepared trial products 10 to 52 were each "colorless and clear", just looking like water; they all had absorbance values of no more than 0.06 upon measurement with a spectrophotometer (UV-1600 of Shimadzu Corporation) at a wavelength of 660 nm, and transmitted light at ΔE values of no more than 3.5 as measured with a color meter (ZE2000 of NIPPON DENSHOKU INDUSTRIES CO., LTD.) using pure water as a reference. The intensity of the deterioration smell from the drinking of these trial products was evaluated in the same way as in Reference Example 1. The averaged evaluation scores are cited in Tables 3 and 4.

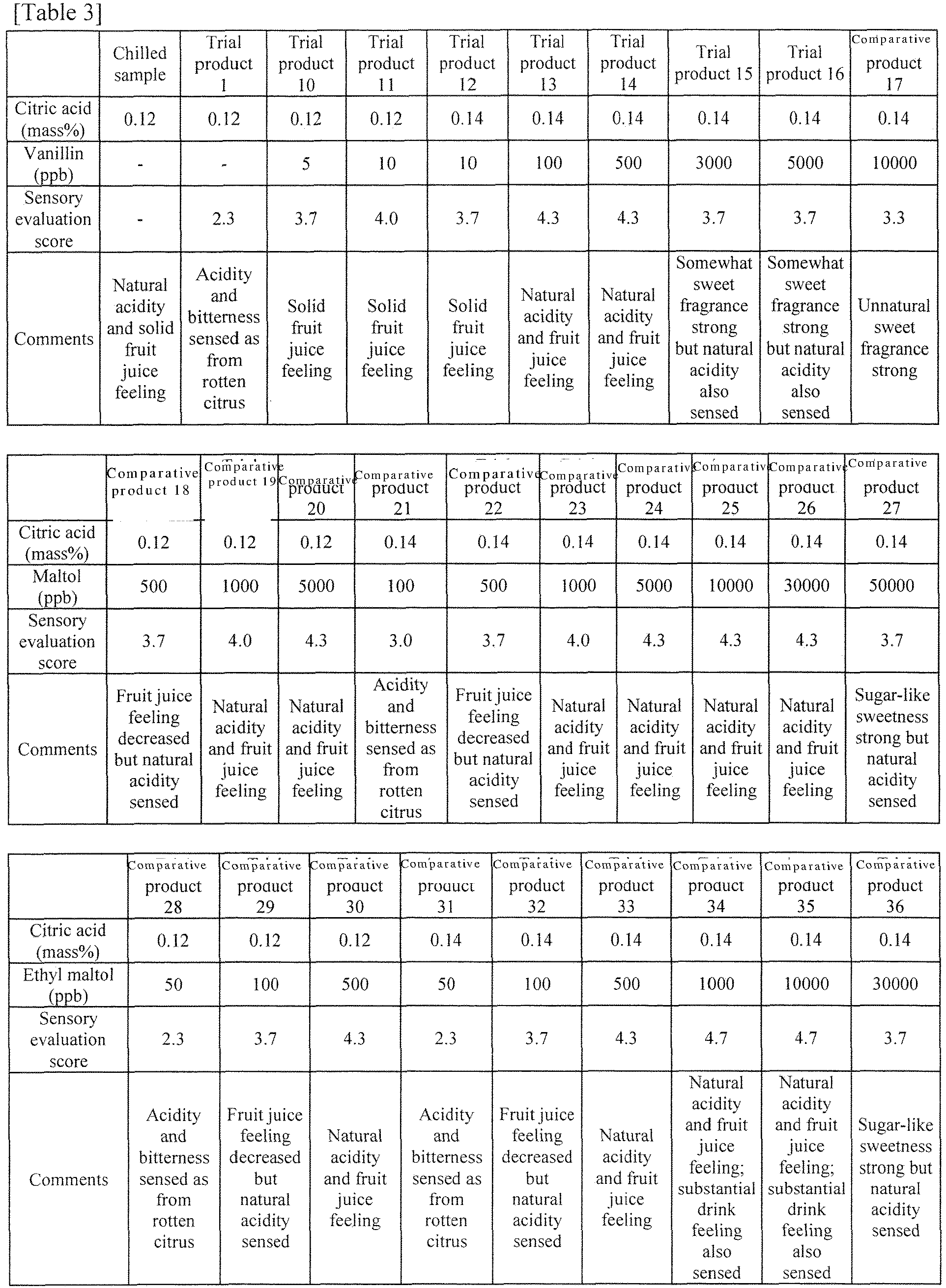

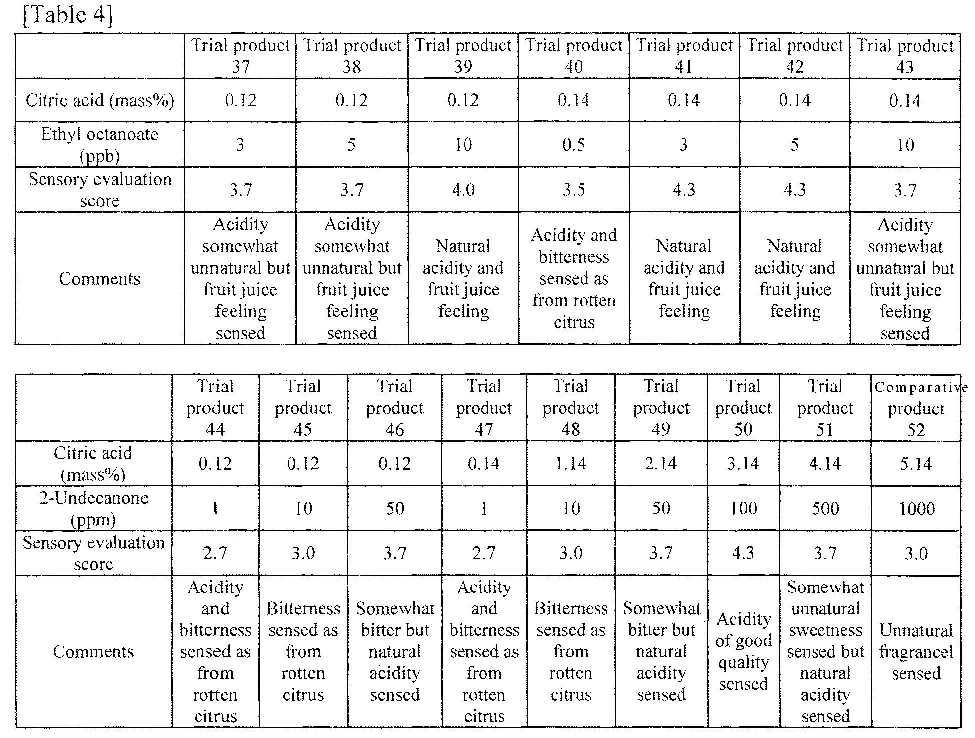

From the data in Tables 3 and 4, it can be seen that the deterioration of the fruit flavoring was less sensed when the content of vanillin, maltol, ethyl maltol, ethyl octanoate or 2-undecanone was 5 ppb or more, 500 ppb or more, 100 ppb or more, 3 ppb or more, or 50 ppb or more, respectively.

### (Example 2)

The effect for suppressing the deterioration smell of a fruit flavoring was checked by combining the respective aroma components. To water, high fructose corn syrup was added to prepare a solution adjusted to Brix 6.0; to the solution, citric acid and a lemon flavoring were added in respective amounts of 0.14 mass% and 0.1 mass%; thereafter, trisodium citrate was added for pH adjustment to 3.6. The thus conditioned solution was filled into a sealable container (a glass bottle with a capacity of 180 ml) and heat-sterilized at 85°C for 10 minutes. By subsequent storage at 55°C for 2 days, the fruit flavoring was caused to undergo accelerated deterioration. The respective aroma components were then added ats the concentrations (unit: ppb) cited in the following Table 5 to prepare trial products 53 to 67. The thus prepared trial products 53 to 67 were each "colorless and clear", just looking like water; they all had absorbance values of no more than 0.06 upon measurement with a spectrophotometer (UV-1600 of Shimadzu Corporation) at a wavelength of 660 nm, and transmitted light at ΔE values of no more than 3.5 as measured with a color meter (ZE2000 of NIPPON DENSHOKU INDUSTRIES CO., LTD.) using pure water as a reference. The intensity of the deterioration smell from the drinking of these trial products was evaluated in the same way as in Reference Example 1. The averaged evaluation scores are cited in Table 5.

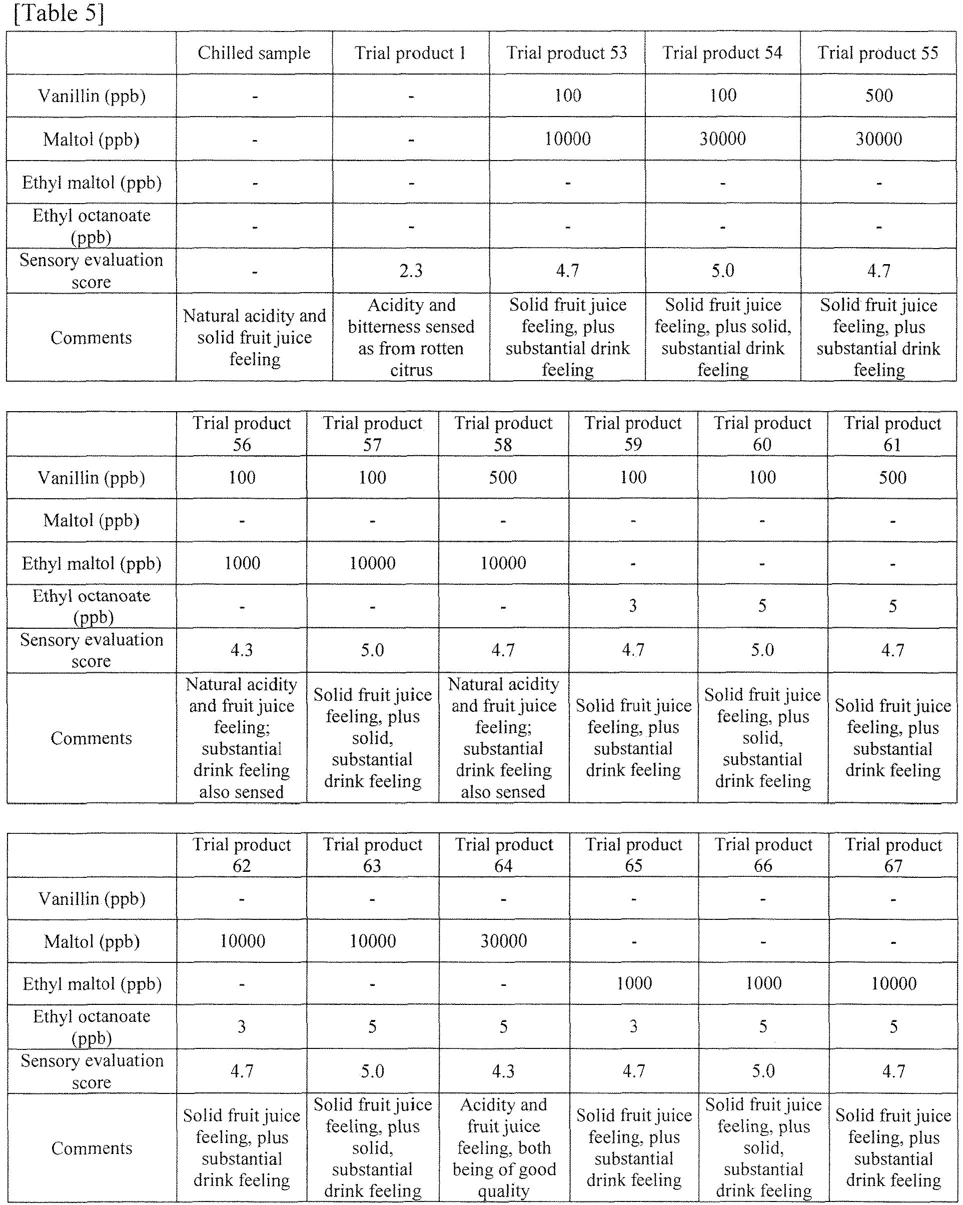

From the data in Table 5, it can be seen that the effectiveness for suppressing the deterioration smell of the fruit flavoring was also observed even when the respective aroma components were used in combination.

### (Example 3)

The effect for suppressing the deterioration smell of a fruit flavoring was checked by replacing citric acid with other acids and using them in combination as acidulants. To water, high fructose corn syrup was added to prepare a solution adjusted to Brix 6.0; to the solution, citric acid, lactic acid and gluconic acid were added to have the concentrations (unit: mass%) cited in the following Table 6; then, a lemon flavoring was added in an amount of 0.1 mass% and trisodium citrate was added for pH adjustment to 3.6. The thus conditioned solution was filled into a sealable container (a glass bottle with a capacity of 180 ml) and heat-sterilized at 85°C for 10 minutes. By subsequent storage at 55°C for 2 days, the fruit flavoring was caused to undergo accelerated deterioration. To the resulting solution, 100 ppb of vanillin was added to prepare trial products 68 to 70. The thus prepared trial products 68 to 70 were each "colorless and clear", just looking like water; they all had absorbance values of no more than 0.06 upon measurement with a spectrophotometer (UV-1600 of Shimadzu Corporation) at a wavelength of 660 nm, and transmitted light at ΔE values of no more than 3.5 as measured with a color meter (ZE2000 of NIPPON DENSHOKU INDUSTRIES CO., LTD.) using pure water as a reference. The intensity of the deterioration smell from the drinking of these trial products was evaluated in the same way as in Reference Example 1. The averaged evaluation scores are cited in Table 6.

**[Table 6]**

| | Chilled sample | Trial product 13 | Trial product 68 Trial product 69 | | Trial product 70 |
|---|---|---|---|---|---|
| Vanillin (ppb) | - | 100 | 100 | 100 | 100 |
| Citric acid (%) | - | 0.14 | 0.11 | 0.10 | 0.07 |
| Lactic acid (%) | - | - | 0.025 | - | 0.025 |
| Gluconic acid (%) | - | - | - | 0.13 | 0.13 |
| Sensory evaluation score | - | 4.3 | 4.7 | 4.7 | 5.0 |
| Comments | Natural acidity and solid fruit juice feeling | Natural acidity and fruit juice feeling; substantial drink feeling also sensed | Natural acidity and fruit juice feeling; substantial drink feeling also sensed solidly | Natural acidity and fruit juice feeling; substantial drink feeling also sensed solidly | Natural acidity and fruit juice feeling; substantial drink feeling also sensed solidly |

From the data in Table 6, it can be seen that the effectiveness for suppressing the deterioration smell of the fruit flavoring was obtained even when the acidulant was changed. It is particularly seen that the effectiveness for suppressing the deterioration smell was enhanced when lactic acid and/or gluconic acid was used in combination with citric acid.

### (Example 4)

The effect for suppressing the deterioration smell of a fruit flavoring was checked by varying the sodium concentration in beverage. To water, high fructose corn syrup was added to prepare a solution adjusted to Brix 6.0; to the solution, citric acid and a lemon flavoring were added in respective amounts of 0.14 mass% and 0.1 mass%; then, trisodium citrate was added for pH adjustment to 3.6. Further, sodium chloride was added so that the sodium content would provide one of the concentrations (unit: mg/100 ml) cited in the following Table 7. The thus conditioned solution was filled into a sealable container (a glass bottle with a capacity of 180 ml) and heat-sterilized at 85°C for 10 minutes. By subsequent storage at 55°C for 2 days, the fruit flavoring was caused to undergo accelerated deterioration. To the resulting solution, 100 ppb of vanillin was added to prepare trial products 71 to 74. The thus prepared trial products 71 to 74 were each "colorless and clear", just looking like water; they all had absorbance values of no more than 0.06 upon measurement with a spectrophotometer (UV-1600 of Shimadzu Corporation) at a wavelength of 660 nm, and transmitted light at ΔE values of no more than 3.5 as measured with a color meter (ZE2000 of NIPPON DENSHOKU INDUSTRIES CO., LTD.) using pure water as a reference. The intensity of the deterioration smell from the drinking of these trial products was evaluated in the same way as in Reference Example 1. The averaged evaluation scores are cited in Table 7.

**[Table 7]**

| | Chilled sample | Trial product 71 | Trial product 72 | Trial product 73 | Trial product 74 |
|---|---|---|---|---|---|
| Vanillin (ppb) | - | 100 | 100 | 100 | 100 |
| Sodium (mg/100ml) | 15 | 15 | 20 | 30 | 40 |
| Sensory evaluation score | - | 4.3 | 4.7 | 5.0 | 4.7 |
| Comments | Natural acidity and solid fruit juice feeling | Natural acidity and fruit juice feeling; substantial drink feeling also sensed | Natural acidity and fruit juice feeling; substantial drink feeling also sensed solidly | Natural acidity and fruit juice feeling; substantial drink feeling also sensed solidly | Natural acidity and fruit juice feeling; substantial drink feeling also sensed solidly |

From the data in Table 7, it can be seen that the effectiveness for suppressing the deterioration smell of the fruit flavoring was obtained even when the sodium concentration in beverage was varied. It is particularly seen that the effectiveness for suppressing the deterioration smell was enhanced when the sodium concentration was between 20 to 40 mg/100 ml.

## Claims

1. A packed clear beverage, containing a fruit flavoring and one or more of the following aroma components:
5 to 5000 ppb of vanillin;
3.0 to 15.0 ppb of ethyl octanoate; or
50 to 500 ppb of 2-undecanone;
with an absorbance of 0.06 or less at a wavelength of 660 nm, wherein
the fruit flavoring is a citrus flavoring.

2. The beverage according to claim 1 which has a ΔE value (color difference) of 3.5 or less, with pure water taken as a reference.

3. The beverage according to claim 1 or 2 which has a reading of 3.0 to 10.0 on a sugar refractometer (Brix).

## Patentansprüche

1. Ein vergepacktes klares Getränk, das einen Fruchtgeschmack und eine oder mehrere der folgenden Aromakomponenten enthält:
5 bis 5000 ppb Vanillin;
3,0 bis 15,0 ppb Ethyloctanoat; oder
50 bis 500 ppb 2-Undecanon;
mit einer Absorbanz von 0,06 oder weniger bei einer Wellenlänge von 660 nm, wobei
der Fruchtgeschmack ein Zitrusgeschmack ist.

2. Das Getränk nach Anspruch 1, das einen ΔE-Wert (Farbunterschied) von 3,5 oder weniger aufweist, wobei reines Wasser als Referenz genommen wird.

3. Das Getränk nach Anspruch 1 oder 2, das einen Messwert von 3,0 bis 10,0 auf einem Zucker-Refraktometer (Brix) aufweist.

## Revendications

1. Boisson claire conditionnée contenant un arôme de fruit et un ou plusieurs des composants aromatiques suivants :
5 à 5 000 ppb de vanilline ;
3,0 à 15,0 ppb d'octanoate d'éthyle ; ou
50 à 500 ppb de 2-undécanone ;
avec une absorbance de 0,06 ou moins à une longueur d'onde de 660 nm, dans laquelle l'arôme de fruit est un arôme d'agrume.

2. Boisson selon la revendication 1 qui présente une valeur ΔE (différence de couleur) de 3,5 ou moins, avec l'eau pure prise en référence.

3. Boisson selon la revendication 1 ou 2 qui présente une mesure de 3,0 à 10,0 sur un réfractomètre à sucre (Brix).
